# FASCICULE DE BREVET EUROPEEN

(11) **EP 3 488 454 B1**
(45) Date de publication et mention de la délivrance du brevet: **22.04.2020**
(21) Numéro de dépôt: 17764867.2
(22) Date de dépôt: 24.07.2017
(51) Int. Cl.: H01G 11/06, H01G 11/14, H01G 11/50, H01G 11/62, H01G 11/82, H01G 11/84

(54) **PROCEDE DE PRÉPARATION D'UN SUPERCONDENSATEUR HYBRIDE DE FORME CYLINDRIQUE COMPORTANT UN MÉTAL ALCALIN IONIQUE**
PROZESS ZUR HERSTSTELLUNG VON HYBRID ZYLINDERFÖRMIGES SUPERKONDENSATOR MIT ALKALIMETALIONEN
PROCESSES FOR PREPARING A HYBRID CYLINDRICAL SUPERCAPACITOR COMPRISING AN IONIC ALKALIN METAL

(30) Priorité: 25.07.2016 FR 1657106
(43) Date de publication de la demande: 29.05.2019
(73) Titulaire: Blue Solutions, 29500 Ergué Gabéric (FR)
(72) Inventeur: CAUMONT, Olivier, 29000 Quimper (FR); DREZEN, Thierry, 29120 Pont L'Abbe (FR)
(74) Mandataire: Goulard, Sophie
(86) Numéro de dépôt international: PCT/FR2017/052043
(87) Numéro de publication internationale: WO 2018/020126

(56) Documents cités:
- CN-A- 104 319 115
- CN-B- 105 047 428
- JP-A- 2007 067 105
- JP-A- 2011 077 279
- US-A1- 2016 172 120

## Description

L'invention concerne un procédé de préparation d'un supercondensateur hybride métal alcalin-ion cylindrique et un supercondensateur hybride métal alcalin-ion cylindrique obtenu selon ledit procédé.

Un supercondensateur hybride lithium-ion (Li-ion) combine les principes de stockage d'une batterie lithium-ion et d'un condensateur à double couche électrochimique (EDLC) et possède une densité d'énergie plus élevée, généralement de l'ordre de 13 ou 14 Wh.kg⁻¹, qu'un EDLC standard. Une cellule symétrique d'un EDLC standard est constituée de deux électrodes capacitives identiques (électrodes de carbone de très grandes surfaces spécifiques, généralement entre 1000 et 2000 m².g⁻¹) déposées sur des collecteurs de courant métalliques, entre lesquels un séparateur poreux assure l'isolation électronique. L'ensemble est immergé dans un électrolyte. La différence de potentiel d'une telle cellule non chargée est de 0 V, et elle augmente linéairement avec le temps au cours de la charge galvanostatique de la cellule à courant constant. Lors de la charge, le potentiel de l'électrode positive augmente linéairement et le potentiel de l'électrode négative diminue linéairement. Au cours de la décharge, la tension de cellule diminue linéairement. Les EDLC symétriques industriels fonctionnant en milieu organique ont habituellement une tension nominale de l'ordre de 2,7 V. *A contrario,* l'électrode négative de type batterie lithium-ion est caractérisée par un potentiel quasiment constant au cours de la charge et de la décharge du système, dans le cas d'un supercondensateur Li-ion. Afin d'accroître la tension de fonctionnement d'un supercondensateur, et ainsi sa densité d'énergie, des supercondensateurs hybrides dans lesquels l'électrode négative d'un EDLC est remplacée par une électrode carbonée de type « batterie lithium-ion » ont été proposés.

Les problèmes principaux à résoudre dans ce type de supercondensateur hybride sont la formation de la couche de passivation et l'intercalation/insertion du lithium dans l'électrode négative. Lors du premier cycle d'insertion des ions lithium, la passivation de l'électrode négative permet la formation d'une couche intermédiaire à la surface de cette électrode. En présence de cette couche de passivation, les ions lithium sont désolvatés avant de s'intercaler/s'insérer dans l'électrode négative. La présence d'une couche de passivation bien formée permet d'éviter l'exfoliation des plans du carbone de l'électrode négative par l'insertion du solvant avec le lithium au cours du cyclage du système. Le lithium est intercalé/inséré dans l'électrode négative jusqu'à atteindre une composition Li∼ₓC₆ avec 0,5<x<1. En cours de fonctionnement, x reste compris entre 0,5 et 1, et de ce fait, le potentiel de l'électrode négative reste relativement stable au cours des charges/décharges successives du supercondensateur hybride.

Dans l'état de la technique, il est connu d'ajouter dans un supercondensateur hybride une source de lithium métallique pour réaliser la couche de passivation et intercaler/insérer une quantité suffisante d'ions lithium dans l'électrode négative. En particulier, lors de l'assemblage d'un supercondensateur hybride, une ou plusieurs feuilles de lithium sont insérées dans l'empilement des différentes couches d'électrodes positives, d'électrodes négatives et de séparateurs, par exemple en début, en fin et/ou au milieu de l'empilement. Lors d'une étape préliminaire (et nécessaire) de formation (i.e. étape initiale de formation), des ions lithium provenant des feuilles de lithium insérées dans l'empilement s'intercalent dans les électrodes négatives. Une fois l'intégralité du lithium consommé, le supercondensateur lithium-ion peut être chargé et déchargé. Cette méthode présente toutefois les inconvénients cités ci-après. Tout d'abord, il est nécessaire de prévoir la quantité exacte de lithium métallique à apporter au supercondensateur hybride pour que, d'une part, cette quantité soit suffisante pour former toutes les électrodes négatives dudit supercondensateur hybride et, d'autre part, qu'elle soit complètement consommée après l'étape préliminaire de formation dans le supercondensateur hybride. En effet, la présence de lithium métallique après l'étape préliminaire de formation peut entraîner la formation de dendrites au cours des cycles ultérieurs et un court-circuit du système. Par ailleurs, l'insertion de feuilles de lithium au moment de l'assemblage du supercondensateur rend le procédé d'assemblage complexe et coûteux. En effet, le nombre d'étapes est augmenté par rapport à un procédé d'assemblage conventionnel ; l'assemblage doit se faire sous atmosphère contrôlée en humidité afin d'éviter la dégradation du lithium métallique pendant son insertion dans l'empilement ; et comme expliqué plus haut, la quantité de lithium métallique à insérer doit être calibrée, induisant la mise en œuvre d'une série de tests et calculs préalables avant l'assemblage qui nécessite d'être réitérée si un des paramètres de la cellule est modifié (e.g. épaisseurs des électrodes, types d'électrodes, etc...).

A titre d'exemple, le document EP 1 400 996 décrit l'interposition d'une source de lithium métallique sacrificielle dans un supercondensateur hybride constitué d'un empilement ou d'un enroulement de couches d'électrode(s) positive(s), d'électrode(s) négative(s) et de séparateur(s). La quantité de lithium métallique apportée dans ledit supercondensateur hybride est calculée de manière à ce que a) la capacité de l'électrode négative par unité de poids de la matière active d'électrode négative soit au moins trois fois plus grande que la capacité de l'électrode positive par unité de poids de la matière active d'électrode positive, et b) le poids de la matière active d'électrode positive soit supérieur au poids de la matière active d'électrode négative. Lorsque le supercondensateur hybride est constitué par un enroulement de couches d'électrode positive, d'électrode négative et de séparateur, une feuille de lithium peut être attachée par pression au collecteur de courant de l'électrode négative de la couche la plus externe de l'enroulement ou disposée au centre de l'enroulement. Dans le premier cas, la pénétration de l'électrolyte au sein de l'enroulement après l'assemblage peut être ralentie puisque l'enroulement est recouvert par la source de lithium, l'électrolyte va donc difficilement se diffuser à l'intérieur de l'enroulement. Dans le second cas, il n'est pas décrit comment et à quel moment le lithium métallique est introduit au centre de l'enroulement. Il n'est pas non plus décrit comment le lithium métallique est connecté électriquement dans le supercondensateur hybride.

Le document JP 2007067105 décrit un procédé de préparation d'un supercondensateur hybride dans lequel le lithium métallique est disposé au centre d'un enroulement d'électrodes et de séparateurs. En particulier, les couches d'électrode positive, d'électrode négative et de séparateur sont enroulées, puis du lithium métallique est placé au centre de l'enroulement. Le lithium métallique est sous la forme d'une feuille de lithium enroulée autour d'une tige métallique jouant le rôle d'un collecteur de courant (e.g. nickel, acier) ; d'un enroulement d'une couche de lithium métallique et d'une couche poreuse de collecteur de courant (e.g. cuivre) ou d'un tube cylindrique de lithium métallique inséré dans un tube cylindrique poreux de collecteur de courant. Puis, l'électrolyte est ajouté, le supercondensateur est hermétiquement fermé et une étape préliminaire de formation (ou étape initiale de formation) est effectuée afin d'intercaler des ions lithium dans l'électrode négative. Là encore la quantité de lithium métallique est calibrée de manière à éviter la présence résiduelle de lithium métallique à la fin du 1^{er} cycle de charge. Par ailleurs, la présence du lithium métallique au centre peut gêner l'imprégnation des électrodes par l'électrolyte. Enfin, le support du lithium métallique au centre de l'enroulement occupe une partie du volume libre normalement destiné à encaisser la surpression engendrée par les gaz formés lors du vieillissement électrique du supercondensateur.

Ainsi, le but de la présente invention est de pallier les inconvénients de l'art antérieur précité et de fournir un procédé de préparation d'un supercondensateur hybride économique, simple, notamment dans lequel l'arrangement de la source de lithium métallique est simplifié, et qui permet d'éviter tout calibrage préalable de la masse de lithium métallique à utiliser.

L'invention a pour objet un procédé de préparation d'un supercondensateur hybride métal alcalin-ion cylindrique comprenant au moins un élément bobiné cylindrique et une enveloppe externe contenant un corps principal destiné à recevoir ledit élément bobiné cylindrique, ledit procédé comprenant au moins les étapes suivantes :
i) la préparation d'un élément bobiné cylindrique centré sur un axe X-X comprenant au moins une électrode positive, au moins une électrode négative et au moins un séparateur intercalé entre les électrodes positive et négative, les électrodes positive et négative et le séparateur étant enroulés ensemble en spires autour dudit axe X-X, l'élément bobiné cylindrique ayant un volume libre central selon l'axe X-X, étant entendu que :
   * l'électrode positive comprend au moins une matière active d'électrode positive capable d'intercaler et de dés-intercaler des ions d'un métal alcalin M1 et/ou capable d'adsorber et de désorber des ions d'un métal alcalin M1, ladite électrode positive étant déposée sur un collecteur de courant d'électrode positive, et
   * ladite électrode négative comprend au moins une matière active d'électrode négative capable d'intercaler et de dés-intercaler des ions d'un métal alcalin M1, ladite électrode négative étant déposée sur un collecteur de courant d'électrode négative,
ii) l'insertion de l'élément bobiné cylindrique dans un corps principal d'une enveloppe externe destiné à recevoir ledit élément bobiné cylindrique,
iii) l'imprégnation de l'élément bobiné cylindrique par un électrolyte liquide non aqueux comprenant un sel dudit métal alcalin M1 et un solvant organique,
ledit procédé étant caractérisé en ce qu'il comprend en outre :
iv) l'insertion d'une masse solide comprenant ledit métal alcalin M1 dans le volume libre central de l'élément bobiné cylindrique, avant ou après l'étape iii),
v) la connexion électrique de la masse solide avec l'électrode négative de manière à obtenir un court-circuit et à intercaler des ions dudit métal alcalin M1 dans l'électrode négative de l'élément bobiné cylindrique,
vi) le retrait de la masse solide de l'élément bobiné cylindrique, et
vii) la fermeture hermétique du corps principal de l'enveloppe externe pour obtenir le supercondensateur hybride métal alcalin-ion cylindrique.

Le procédé de l'invention est simple et économique. Il permet d'intercaler une quantité de métal alcalin suffisante dans l'électrode négative tout en évitant tout risque de formation de dendrites et/ou de court-circuit induit par la présence de métal alcalin résiduel dans le supercondensateur. En effet, d'une part, l'étape v) est une étape préliminaire de formation des électrodes négatives, également appelée étape initiale de formation. Ainsi, à l'issue de l'étape v) ou vi), les électrodes négatives du supercondensateur hybride sont prêtes à l'emploi pour des cycles de charge et décharge. D'autre part, le métal alcalin M1 présent au centre de l'élément bobiné (i.e. de l'assemblage d'électrodes enroulé en spirale) est retiré du supercondensateur [étape vi)] dès la formation des électrodes négatives [i.e. après l'étape v)] et avant la fermeture hermétique (et définitive) du supercondensateur [i.e. avant l'étape vii)]. Par ailleurs, comme le métal alcalin M1 est retiré, le volume libre au centre du supercondensateur résultant de ce retrait peut être utilisé pour contenir les gaz générés lors du vieillissement électrique du supercondensateur par cycles de charge/décharge (cyclages) ou par maintien en tension constante (floatings), et ainsi limiter/retarder le gonflement éventuel du supercondensateur.

L'étape i) peut comprendre une sous-étape i-1) d'assemblage d'au moins une électrode positive, d'au moins une électrode négative, et d'au moins un séparateur intercalé entre l'électrode négative et l'électrode positive, et une sous-étape i-2) d'enroulement de l'assemblage en spirale autour d'un axe X-X pour former un élément bobiné cylindrique ayant un volume libre central selon l'axe X-X.

Le volume libre central selon l'axe X-X est délimité par la spire la plus interne de l'élément bobiné cylindrique.

Dans les procédés de l'art antérieur, ce volume central peut par exemple être occupé par un support solide central (par exemple un noyau) pour faciliter le bobinage ou l'enroulement (i.e. volume non libre).

Dans le procédé de l'invention, la sous-étape i-2) (ou plus généralement l'étape i)] s'effectue de préférence sans support solide central.

Toutefois, il est possible d'effectuer la sous-étape i-2) avec un tel support solide central, à condition qu'une sous-étape ultérieure i-3) de retrait dudit support solide central soit mise en œuvre avant l'étape iv). Cette sous-étape i-3) permet ainsi de libérer le volume central de l'élément bobiné cylindrique avant de réaliser l'étape iv).

A l'issue de l'étape i), l'élément bobiné cylindrique est dans une configuration telle que le collecteur de courant de l'électrode positive dépasse à une extrémité dudit élément bobiné (i.e. collecteur de courant positif dit « dépassant » ou « débordant ») et le collecteur de courant de l'électrode négative dépasse à l'autre extrémité (i.e. extrémité opposée) dudit élément bobiné (i.e. collecteur de courant négatif dit « dépassant » ou « débordant »).

En effet, l'élément bobiné cylindrique est délimité à ses deux extrémités opposées, respectivement, par deux spires collectrices de courant.

Selon une forme de réalisation particulièrement préférée de l'invention, l'élément bobiné cylindrique centré sur un axe X-X comprend en outre un séparateur déposé sur l'électrode positive ou sur l'électrode négative. Cela permet ainsi lors de l'étape i) d'obtenir les éléments suivants : électrode positive/séparateur/électrode négative/séparateur ou séparateur/électrode positive/séparateur/électrode négative enroulés ensemble en spires autour dudit axe X-X.

L'élément bobiné peut comprendre en outre une couche dudit métal alcalin M1 sur au moins une des faces du collecteur de courant négatif dépassant.

Le collecteur de courant négatif dépassant est de préférence perforé.

Dans un mode de réalisation particulier, la matière active de l'électrode négative comprend un matériau carboné.

Le matériau carboné de l'électrode négative est de préférence choisi parmi le graphène, le graphite, les carbones basse température (durs ou tendres), le noir de carbone, les nanotubes de carbone et les fibres de carbone.

La surface spécifique (méthode B.E.T) du matériau carboné de l'électrode négative est de préférence inférieure à 50 m²/g environ.

L'électrode négative a de préférence une épaisseur variant de 10 à 100 µm environ.

Selon une forme de réalisation particulièrement préférée de l'invention, la matière active de l'électrode négative comprend du graphite et éventuellement un matériau choisi parmi le charbon actif, le graphène, le carbone dérivé de carbure, le carbone dur et le carbone tendre.

Dans un mode de réalisation particulier, la matière active de l'électrode positive comprend un matériau carboné poreux ou un oxyde de métal de transition.

L'oxyde de métal de transition de l'électrode positive est de préférence choisi parmi MnO₂, SiO₂, NiO₂, TIO₂, RuO₂ et VNO₂.

Le matériau carboné poreux est de préférence choisi parmi les charbons actifs, le carbone dérivé de carbure (CDC), les nanotubes de carbone poreux, les noirs de carbones poreux, les fibres de carbone poreuses, les oignons de carbone, les carbones issus de coke (dont la porosité est accrue par charge).

Selon une forme de réalisation préférée de l'invention, la surface spécifique du matériau carboné poreux de l'électrode positive varie de 1200 à 3000 m²/g environ (méthode B.E.T), et de préférence de 1200 à 1800 m²/g environ (méthode B.E.T).

Selon une forme de réalisation particulièrement préférée de l'invention, la matière active de l'électrode positive comprend du charbon actif et éventuellement un matériau choisi parmi le graphite, le graphène, le carbone dérivé de carbure, le carbone dur et le carbone tendre.

L'électrode positive a de préférence une épaisseur variant de 50 à 150 µm environ.

Outre la matière active, l'électrode positive (respectivement l'électrode négative) comprend généralement au moins un liant.

Le liant peut être choisi parmi les liants organiques classiquement connus de l'homme de l'art et électrochimiquement stables jusqu'à un potentiel de 5 V vs le métal alcalin M1 (e.g. Li). Parmi de tels liants, on peut notamment citer :
- les homopolymères et les copolymères de fluorure de vinylidène, tels que le poly(fluorure de vinylidène) (PVDF),
- les copolymères d'éthylène, de propylène et d'un diène,
- les homopolymères et les copolymères de tétrafluoroéthylène,
- les homopolymères et les copolymères de N-vinylpyrrolidone,
- les homopolymères et les copolymères d'acrylonitrile, ou
- les homopolymères et les copolymères de méthacrylonitrile.

Lorsqu'il est présent, le liant représente de préférence de 1 à 15% en masse environ par rapport à la masse totale de l'électrode.

L'électrode positive (respectivement l'électrode négative) peut comprendre en outre au moins un agent conférant une conductivité électronique.

L'agent conférant des propriétés de conduction électronique peut être du carbone, de préférence choisi parmi les noirs de carbone tels que le noir d'acétylène, les noirs de carbone à haute surface spécifique tels que les produits vendus sous la dénomination Ketjenblack® EC-600JD par la société AKZO NOBEL, des nanotubes de carbone, du graphite, du graphène, ou des mélanges de ces matériaux.

Selon l'invention, lorsqu'il est présent, le matériau conférant des propriétés de conduction électronique représente de préférence de 1 à 10% en masse environ par rapport à la masse totale de l'électrode.

La matière active, le liant et l'agent conférant des propriétés de conduction électronique forment l'électrode et celle-ci est déposée sur le collecteur de courant correspondant.

Le collecteur de courant de l'électrode négative peut être un collecteur de courant en matériau conducteur, notamment en cuivre.

Le collecteur de courant de l'électrode positive peut être un collecteur de courant en matériau conducteur, notamment en aluminium.

Le séparateur est généralement en un matériau poreux non conducteur électronique, par exemple en un matériau polymère à base de polyoléfines (e.g. polyéthylène, polypropylène) ou en fibres (e.g. fibres de verre, fibres de bois ou fibres de cellulose).

À titre d'exemple de séparateurs en matériau polymère à base de polyoléfines, on peut citer ceux commercialisés sous la référence Celgard®.

Le corps principal de l'enveloppe externe peut avoir une partie inférieure et une partie supérieure.

L'étape ii) peut être effectuée de manière à positionner le collecteur de courant de l'électrode positive dépassant dans la partie inférieure du corps principal de l'enveloppe externe et le collecteur de courant de l'électrode négative dépassant dans la partie supérieure du corps principal de l'enveloppe externe.

L'étape ii) peut également comprendre une sous-étape ii-1) au cours de laquelle le collecteur de courant de l'électrode négative dépassant est connecté électriquement à une pièce en matériau conducteur, de préférence par soudage (e.g. à l'aide d'une soudure laser par transparence), brasage, brasage-diffusion ou contacts serrés ou vissés. La technique de soudage laser par transparence permet de connecter électriquement toutes les spires de l'élément bobiné.

L'étape ii) peut comprendre une sous-étape ii-2) au cours de laquelle le collecteur de courant de l'électrode positive dépassant est connecté électriquement à la partie inférieure du corps principal de l'enveloppe externe, de préférence par soudage (e.g. à l'aide d'une soudure laser par transparence), brasage, brasage-diffusion ou contacts serrés ou vissés. La technique de soudage laser par transparence est conventionnellement utilisée dans les procédés de préparation de supercondensateurs symétriques non hybrides classiques. Elle permet de connecter électriquement toutes les spires de l'élément bobiné.

Les sous-étapes ii-1) et ii-2) peuvent être simultanées ou distinctes.

Ainsi, à l'issue de l'étape ii) ou des sous-étapes ii-1) et/ou ii-2), le collecteur de courant de l'électrode négative dépassant est situé dans la partie supérieure du corps principal de l'enveloppe externe et le collecteur de courant de l'électrode positive dépassant est situé dans la partie inférieure du corps principal de l'enveloppe externe.

Il va de soi que l'invention n'est pas limitée au mode de réalisation tel que décrit ci-dessus. En effet, il est tout à fait envisageable d'inverser les parties supérieure et inférieure du corps principal de l'enveloppe externe, et notamment d'obtenir une configuration dans laquelle le collecteur de courant de l'électrode négative dépassant est situé dans la partie inférieure du corps principal de l'enveloppe externe et le collecteur de courant de l'électrode positive dépassant est situé dans la partie supérieure du corps principal de l'enveloppe externe.

Ceci étant, dans la description qui va suivre ci-après lorsque l'on parle des parties supérieure et inférieure du corps principal de l'enveloppe externe, on considère qu'à l'issue de l'étape ii), le collecteur de courant de l'électrode négative dépassant est situé dans la partie supérieure du corps principal de l'enveloppe externe et le collecteur de courant de l'électrode positive dépassant est situé dans la partie inférieure du corps principal de l'enveloppe externe. Toutefois, il est possible de mettre en œuvre la configuration inverse.

La pièce en matériau conducteur est de préférence constituée d'un matériau conducteur identique à celui du collecteur de courant de l'électrode négative, notamment en cuivre.

La pièce en matériau conducteur peut être configurée pour fermer de façon étanche et temporaire au moins en partie, voire complètement, la partie supérieure du corps principal de l'enveloppe externe du supercondensateur (e.g. à l'issue de l'étape iv)).

La pièce en matériau conducteur peut être apte à traverser de manière étanche la partie supérieure du corps principal de l'enveloppe externe, notamment *via* un moyen d'étanchéité (e.g. joint d'étanchéité) qui assure l'isolation électrique entre la pièce en matériau conducteur et l'enveloppe externe.

Les parties inférieure et supérieure du corps principal de l'enveloppe externe peuvent être deux éléments distincts. L'étape ii) comprend alors une sous-étape ii-3) au cours de laquelle lesdites parties sont reliées mécaniquement pour former le corps principal de l'enveloppe externe, notamment par soudage.

La sous-étape ii-3) peut être effectuée avant ou après les sous-étapes ii-1) et ii-2). Elle est de préférence effectuée après les sous-étapes ii-1) et ii-2). Cela permet ainsi de réaliser plus facilement et librement les sous-étapes ii-1) et ii-2).

La partie inférieure du corps principal de l'enveloppe externe est généralement constituée d'un matériau conducteur électrochimiquement compatible avec celui du collecteur de courant de l'électrode positive, notamment en aluminium. Le supercondensateur peut comprendre en outre un couvercle, solidaire ou distinct de ladite partie inférieure, ledit couvercle étant constitué d'un matériau conducteur électrochimiquement compatible avec celui du collecteur de courant de l'électrode positive, notamment en aluminium. Ce couvercle permet de fermer hermétiquement le corps principal de l'enveloppe externe du supercondensateur au niveau de sa partie inférieure.

La partie supérieure du corps principal de l'enveloppe externe est généralement constitué d'un matériau conducteur électrochimiquement compatible avec celui du collecteur de courant de l'électrode positive, notamment en aluminium.

Toutefois, il est possible d'utiliser un matériau conducteur électrochimiquement compatible avec celui du collecteur de courant de l'électrode négative, notamment en cuivre. C'est une solution plus coûteuse (e.g. utilisation de cuivre vs de l'aluminium). Par ailleurs, elle nécessite d'effectuer la sous-étape ii-3) *via* une liaison différente de la soudure (e.g. sertissage, collage, etc...), afin de permettre l'isolation électrique des parties inférieure et supérieure du corps principal de l'enveloppe externe.

Dans ce mode de réalisation, la pièce en matériau conducteur peut faire partie intégrante de la partie supérieure du corps principal de l'enveloppe externe.

A l'issue de l'étape ii), la partie inférieure du corps principal de l'enveloppe externe est fermée hermétiquement et de préférence définitivement.

Le solvant organique de l'électrolyte liquide non aqueux permet d'optimiser le transport et la dissociation des ions du métal alcalin M1.

Il peut comprendre un ou plusieurs composés polaires aprotiques choisis parmi les carbonates linéaires ou cycliques, les éthers linéaires ou cycliques, les esters linéaires ou cycliques, les sulfones linéaires ou cycliques, les sulfamides et les nitriles.

Le solvant organique comprend de préférence, au moins deux carbonates choisis parmi le carbonate d'éthylène, le carbonate de propylène, le carbonate de diméthyle, le carbonate de diéthyle et le carbonate de méthyle et d'éthyle.

Le sel du métal alcalin M1 utilisé dans l'électrolyte liquide non aqueux peut être choisi parmi M1PF₆, M1AsF₆, M1ClO₄, M1BF₄, M1C₄BO₈, M1(C₂F₅SO₂)₂N, M1[(C₂F₅)₃PF₃], M1CF₃SO₃, M1CH₃SO₃, M1N(SO₂CF₃)₂ et M1N(SO₂F)₂, M1₂SO₄, M1NO₃, M1₃PO₄, M1₂CO₃, M1FSI (FSI = bis(fluorosulfonyl)imide), M1BETI (BETI = bis(perfluoroéthanesulfonyl)imide également dénommé PFSI) et M1TFSI (TFSI = bis-trifluorométhanesulfonimide), M1 étant tel que défini dans l'invention.

A l'issue de l'étape d'imprégnation iii), l'électrolyte liquide non aqueux imprègne l'élément bobiné et éventuellement la masse solide lorsque l'étape iv) est effectuée avant l'étape iii).

Lors de l'étape iii), un excès d'électrolyte liquide non aqueux est de préférence utilisé de manière à baigner complètement l'élément bobiné cylindrique et la masse solide. Cela permet ainsi d'améliorer la dissolution du métal alcalin M1.

A l'issue de l'étape iii) ou de l'étape iv), la masse solide se retrouve donc en contact ionique direct avec l'élément bobiné cylindrique.

L'étape iv) permet de positionner la masse solide au cœur de l'élément bobiné cylindrique. Elle est effectuée avant ou après l'étape d'imprégnation iii) de l'élément bobiné cylindrique par l'électrolyte liquide non aqueux.

L'étape iv) est de préférence effectuée après l'étape iii) (i.e. le plus en aval dans le procédé de l'invention). Cela permet ainsi de réduire le nombre d'étapes faites sous atmosphère contrôlée. En effet, le métal alcalin M1 est généralement manipulé sous atmosphère contrôlée en humidité, notamment sous atmosphère inerte, au cours de l'étape iv) et des étapes ultérieures.

Le métal alcalin M1 est de préférence choisi parmi le lithium, le sodium et le potassium, et de préférence encore du lithium.

Dans la présente invention, l'expression « masse solide comprenant ledit métal alcalin M1 » signifie une masse sous la forme solide. En d'autres termes, la masse n'est pas sous la forme pulvérulente. Cela signifie également que le métal alcalin M1 ou tout autre élément chimique contenu dans la masse solide est sous la forme solide et non pulvérulente.

La masse solide a de préférence une hauteur supérieure ou égale à celle de l'élément bobiné cylindrique. Ceci permet ainsi de fournir des ions du métal alcalin M1 sur toute la hauteur des électrodes de l'élément bobiné cylindrique au cours de l'étape v).

La masse solide comprenant ledit métal alcalin M1 est de préférence sous la forme d'un cylindre creux ou sous la forme d'un barreau plein ou d'une tige pleine, notamment cylindrique.

Le barreau ou la tige peut avoir un diamètre allant de 1 à 50 mm environ, et de préférence allant de 5 à 20 mm environ.

Le barreau ou la tige peut avoir un diamètre le plus proche possible du diamètre du volume libre central de l'élément bobiné cylindrique. Cela permet ainsi de minimiser la distance à parcourir par les ions du métal alcalin M1.

La masse solide peut être uniquement constituée dudit métal alcalin M1 ou comprendre en outre un matériau conducteur tel que du cuivre.

Lorsque la masse solide est uniquement constituée dudit métal alcalin M1, elle est de préférence sous la forme d'un barreau plein ou d'une tige pleine dudit métal alcalin M1.

Lorsque la masse solide comprend en outre un matériau conducteur, elle peut être sous la forme d'un cylindre creux comprenant une couche interne dudit matériau conducteur et une couche externe dudit métal alcalin M1 entourant ladite couche interne ou sous la forme d'un cylindre plein comprenant une âme centrale dudit matériau conducteur et une couche dudit métal alcalin M1 entourant ladite âme centrale.

Le matériau conducteur de la couche interne ou de l'âme centrale peut être sous la forme d'une mousse de matériau conducteur (matériau conducteur poreux). Cela permet ainsi de déposer le métal alcalin M1 au sein de la mousse de matériau conducteur et d'augmenter la surface d'échange entre le métal alcalin M1 et l'électrolyte liquide non aqueux lors de l'étape iii) ou iv).

L'insertion selon l'étape iv) est de préférence effectuée par la partie supérieure du corps principal de l'enveloppe externe.

A l'issue de l'étape iv) [si l'étape iv) est effectuée après l'étape iii)] ou de l'étape iii) [si l'étape iv) est effectuée avant l'étape iii)], la partie supérieure du corps principal de l'enveloppe externe est de préférence fermée hermétique et temporairement.

La fermeture temporaire permet ainsi de pouvoir réaliser l'étape vi) de retrait de la masse solide, une fois l'étape v) initiale de formation effectuée.

L'étape v) permet d'intercaler des ions du métal alcalin M1 dans l'électrode négative et ainsi d'amener l'électrode négative à un potentiel plus bas.

Au cours de l'étape v), la masse solide peut être reliée mécaniquement et électriquement à la pièce en matériau conducteur telle que définie précédemment (également appelée « première pièce en matériau conducteur ») ou à une autre pièce en matériau conducteur (également appelée « deuxième pièce en matériau conducteur »), notamment en cuivre ou en alliage de cuivre (e.g. laiton).

La deuxième pièce en matériau conducteur est configurée pour assurer la connexion électrique directe ou indirecte avec la première pièce en matériau conducteur. Cela permet ainsi de connecter électriquement la masse solide avec l'électrode négative *via* les deux pièces en matériau conducteur.

La connexion électrique entre la masse solide et l'électrode négative peut donc se faire *via* la première pièce en matériau conducteur ou les première et deuxième pièces en matériau conducteur.

Généralement, les étapes iv) et v) sont concomitantes. En d'autres termes, la connexion électrique entre la masse solide et l'électrode négative se fait lors de l'insertion de la masse solide dans le volume libre central de l'élément bobiné cylindrique, notamment lorsque la masse solide est complètement insérée dans le volume libre central de l'élément bobiné cylindrique. La connexion électrique de l'étape v) se fait ainsi par contact électrique de la masse solide avec la première pièce en matériau conducteur ou par contact électrique de la deuxième pièce en matériau conducteur avec la première pièce en matériau conducteur, la première pièce en matériau conducteur étant elle-même en contact électrique avec le collecteur de courant dépassant de l'électrode négative.

Dès que ce contact est effectué, cela forme un court-circuit entre l'électrode négative de l'élément bobiné et la masse solide, induisant la migration des ions du métal alcalin M1 vers l'électrode négative.

La connexion électrique entre les première et deuxième pièces en matériau conducteur peut être directe ou indirecte (i.e. court-circuit direct ou indirect).

Une connexion électrique directe implique que les deux pièces soient en contact mécanique et électrique.

Le contact direct permet (une fois le corps principal de l'enveloppe externe fermé) de réaliser l'étape v) sans précaution particulière, à l'exception d'éviter le contact entre les pôles positif et négatif.

Le type de liaison directe entre la première pièce en matériau conducteur et la deuxième pièce en matériau conducteur peut impliquer un vissage avec appui électrique et joint d'étanchéité, un pinçage, un clipsage ou un blocage ¼ de tour.

La connexion électrique indirecte implique par exemple l'application entre lesdites pièces d'une différence de potentiel, d'une circulation de courant ou la présence d'une résistance contrôlée. Cela permet de mieux contrôler le processus d'intercalation des ions du métal alcalin M1 sur l'électrode négative au cours de l'étape v).

Ce mode de réalisation implique la maîtrise de la circulation de courant dans la résistance contrôlée, et donc le bon dimensionnement initial de la résistance, ou la mise en œuvre de bancs de charge/décharge ou d'alimentations contrôlées pour assurer les potentiels ou les passages de courant.

L'avantage d'un tel mode de réalisation est de pouvoir suivre l'évolution du potentiel de l'électrode négative vs l'électrode positive pour déterminer la fin de l'étape v).

Le type de liaison indirecte entre la première pièce en matériau conducteur et la deuxième pièce en matériau conducteur peut impliquer :
- une pièce intermédiaire isolante (e.g. en matériau élastomère ou thermoplastique) se situant entre les deux pièces en matériau conducteur et étant connectée mécaniquement auxdites pièces en matériau conducteur, et
- une connexion électrique entre les deux pièces en matériau conducteur à l'aide d'un circuit électrique externe (chargeur/déchargeur), d'une résistance externe ou d'un interrupteur de court-circuit externe ; ou
- une pièce intermédiaire à résistivité contrôlée se situant entre les deux pièces en matériau conducteur et étant connectée mécaniquement auxdites pièces en matériau conducteur.

La pièce intermédiaire isolante assure l'étanchéité entre les deux pièces en matériau conducteur.

Dans le cas de l'utilisation d'une pièce intermédiaire à résistivité contrôlée (également appelée « entretoise à résistance contrôlée »), la connexion électrique entre les deux pièces en matériau conducteur est effectuée *via* la résistance électrique fournie par la pièce intermédiaire à résistivité contrôlée.

Cette pièce intermédiaire à résistivité contrôlée assure également l'étanchéité entre les deux pièces en matériau conducteur (e.g. pièce en matériau élastomère ou thermoplastique).

La deuxième pièce en matériau conducteur peut être configurée pour fermer de façon étanche (i.e. hermétique) et temporaire au moins en partie, voire complètement, la partie supérieure du corps principal de l'enveloppe externe du supercondensateur (e.g. à l'issue de l'étape iv)).

Selon une forme de réalisation particulièrement préférée de l'invention, l'association des première et deuxième pièces en matériau conducteur (et éventuellement de la pièce intermédiaire isolante ou à résistivité contrôlée) ferme complètement la partie supérieure du corps principal de l'enveloppe externe du supercondensateur (e.g. à l'issue de l'étape iv)).

En particulier, la première pièce en matériau conducteur comporte un volume libre central permettant le passage et l'insertion de la masse solide dans le volume libre central de l'élément bobiné cylindrique [étape iv)] et la deuxième pièce en matériau conducteur est configurée pour fermer ou recouvrir complètement le volume libre central de la première pièce à l'issue de l'étape iv) (i.e. lorsque l'insertion est terminée). Ainsi, au cours de l'étape iv), la masse solide est insérée dans le volume central libre de l'élément bobiné cylindrique *via* le volume central libre de la première pièce en matériau conducteur. A la fin de l'insertion, l'association des première et deuxième pièces en matériau conducteur ferme de façon étanche et temporaire la partie supérieure du corps principal de l'enveloppe externe.

Lorsque la deuxième pièce en matériau conducteur est configurée pour recouvrir complètement le volume libre central de la première pièce, celle-ci peut avoir un diamètre ou une longueur supérieure à celui ou celle du volume libre central.

Selon une forme de réalisation particulièrement préférée de l'invention, la deuxième pièce en matériau conducteur est également configurée pour servir de moyen de prise. Cela permet ainsi de faciliter le retrait de la masse solide lors de l'étape vi).

Lorsque la deuxième pièce en matériau conducteur est configurée pour fermer complètement le volume libre central de la première pièce sans toutefois le recouvrir, celle-ci peut être configurée pour s'insérer complètement dans le volume libre central.

Elle peut être par exemple sous la forme d'une collerette entourant la masse solide, ladite collerette étant en contact mécanique et électrique avec la première pièce en matériau conducteur.

Dans ce mode de réalisation, la masse solide peut être en outre reliée mécaniquement à un moyen de prise en matériau isolant. Cela permet ainsi de faciliter le retrait de la masse solide lors de l'étape vi).

La pièce intermédiaire isolante (respectivement la pièce intermédiaire à résistivité contrôlée) peut également comporter un volume libre central permettant le passage et l'insertion de la masse solide dans le volume libre central de l'élément bobiné [étape iv)] et la deuxième pièce en matériau conducteur est configurée pour fermer ou recouvrir complètement le volume libre central de la pièce intermédiaire isolante (respectivement de la pièce intermédiaire à résistivité contrôlée) à l'issue de l'étape iv) (i.e. lorsque l'insertion est terminée). Ainsi, au cours de l'étape iv), la masse solide est insérée dans le volume central libre de l'élément bobiné cylindrique *via* le volume central libre de la pièce intermédiaire isolante (respectivement de la pièce intermédiaire à résistivité contrôlée) et de la première pièce en matériau conducteur. A la fin de l'insertion, l'association des première et deuxième pièces en matériau conducteur (et éventuellement de la pièce intermédiaire isolante ou à résistivité contrôlée) ferme de façon étanche et temporaire la partie supérieure du corps principal de l'enveloppe externe du supercondensateur.

Afin de faciliter l'insertion de la masse solide, le volume libre central de la première pièce en matériau conducteur (respectivement le volume central libre de la pièce intermédiaire isolante ou à résistivité contrôlée) a des dimensions (e.g. un diamètre) sensiblement identiques à celles (e.g. au diamètre) du volume libre central de l'élément bobiné cylindrique.

La deuxième pièce en matériau conducteur est de préférence de forme rectangulaire, carrée ou cylindrique, notamment de forme identique à celle de la première pièce en matériau conducteur de manière à améliorer le contact et la connexion électrique entre les première et deuxième pièces en matériau conducteur.

D'autres moyens d'étanchéité entre les première et deuxième pièces en matériau conducteur que la pièce intermédiaire isolante ou à résistivité contrôlée peuvent être utilisés pour assurer une fermeture étanche et temporaire de la partie supérieure du corps principal de l'enveloppe.

L'étape v) peut durer un temps suffisant pour permettre de charger l'électrode négative en ions du métal alcalin M1 à une valeur allant de 70 à 95% environ de la charge totale de l'électrode, et de préférence à une valeur allant de 80 à 90% environ de la charge totale de l'électrode.

Si l'électrode négative n'est pas chargée suffisamment, elle devient instable et son potentiel remonte avec le temps.

Si l'électrode négative est trop chargée, elle peut arriver à saturation de charge en fonctionnement et se dégrader.

Selon une forme de réalisation de l'invention, l'étape v) dure au moins 24 heures, et de préférence au moins 7 jours.

L'étape v) peut être effectuée à la température ambiante (i.e. 20-25°C) ou à une température plus élevée que la température ambiante (par exemple comprise entre 25 °C et 70°C) pour augmenter la diffusion ionique et accélérer la formation de l'électrode négative, et ainsi accélérer la consommation de la masse solide dans l'électrolyte liquide utilisé.

Au cours de l'étape vi), la masse solide est retirée de l'élément bobiné cylindrique.

Ainsi, à l'issue de l'étape vi), le supercondensateur ne comprend plus de métal alcalin M1. Par ailleurs, les gaz crées pendant l'étape v) s'échappent de l'intérieur du supercondensateur, d'une part, pour permettre au volume central d'être à nouveau libre et, d'autre part, pour permettre d'encaisser la pression des gaz émis lors du vieillissement ultérieur du supercondensateur, et ainsi éviter ou limiter les déformations de l'enveloppe externe.

L'étape vii) est de préférence effectuée à l'aide d'un bouchon de fermeture, par exemple de type rivet, d'un couvercle, d'une soudure (par exemple par la technique de soudage par friction malaxage, bien connue selon l'anglicisme « Friction Stir Welding ») ou d'un opercule éventuellement équipé d'une valve anti-surpression. L'étape vii) peut être effectuée selon toute autre méthode connue de l'homme du métier.

Cette étape de fermeture est généralement définitive, c'est-à-dire qu'à l'issue de l'étape vii), le supercondensateur est fonctionnel.

Dans la présente invention, le terme « supercondensateur fonctionnel » signifie que le supercondensateur est prêt à être testé et/ou contrôlé, puis emballé, et enfin commercialisé.

Le bouchon de fermeture est de préférence configuré pour fermer le volume libre central de la première pièce en matériau conducteur.

Le procédé peut comprendre en outre après l'étape vi) ou pendant l'étape vi), une étape vi') de vidage du surplus d'électrolyte liquide non aqueux présent dans le corps principal de l'enveloppe externe.

Cette étape vi') permet ainsi d'augmenter le volume libre central de l'élément bobiné après le retrait de la masse solide selon l'étape vi).

L'invention a également pour objet un supercondensateur hybride métal alcalin-ion cylindrique, caractérisé en ce qu'il est obtenu selon le procédé de l'invention.

En effet, à l'issue de l'étape vi), le supercondensateur hybride métal alcalin-ion cylindrique ne contient aucun résidu de métal alcalin M1. Une partie du métal alcalin M1 de la masse solide a été intercalée dans l'électrode négative au cours de l'étape initiale de formation [étape v)], et l'autre partie (i.e. la partie restante) du métal alcalin M1 de la masse solide a été retirée lors de l'étape suivante vi).

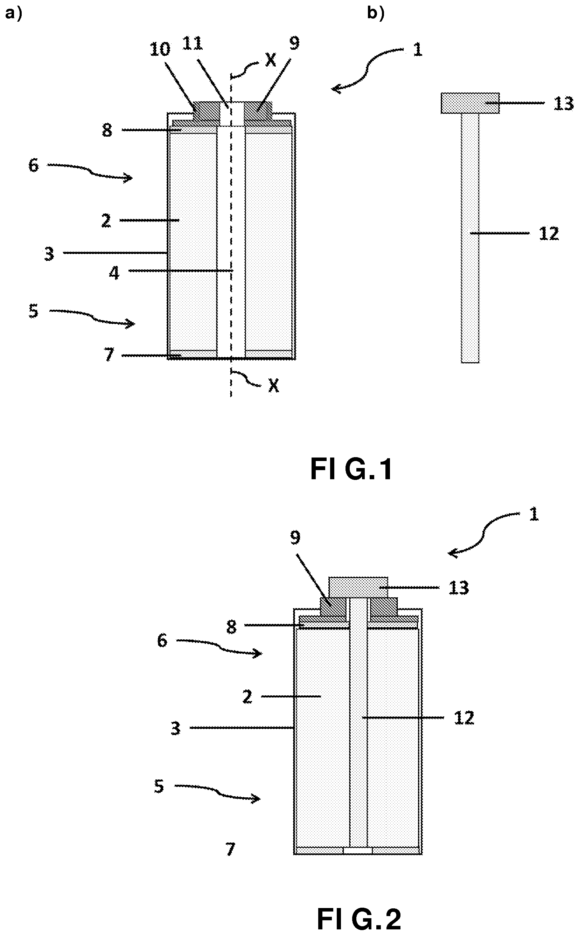

Plusieurs modes de réalisation de l'invention sont décrits ci-après en référence aux figures 1 à 6.

La figure 1 représente une vue en coupe selon un axe transversal du supercondensateur de la présente invention tel qu'obtenu à l'issue de l'étape ii) (figure la) et de la masse solide comprenant ledit métal alcalin M1 avant son insertion lors de l'étape iv) dans le volume libre central de l'élément bobiné cylindrique (figure 1b).

En particulier, la figure la illustre un supercondensateur hybride métal alcalin-ion cylindrique **1** comprenant au moins un élément bobiné cylindrique **2** et une enveloppe externe **3** contenant un corps principal destiné à recevoir ledit élément bobiné cylindrique **2**.

L'élément bobiné cylindrique **2** comprend au moins une électrode positive, au moins une électrode négative et au moins un séparateur intercalé entre les électrodes positive et négative, les électrodes positive et négative et le séparateur étant enroulés ensemble en spires autour d'un axe X-X, l'élément bobiné cylindrique ayant un volume libre central **4** selon l'axe X-X. L'électrode positive comprend au moins une matière active d'électrode positive capable d'intercaler et de dés-intercaler des ions d'un métal alcalin M1 et/ou capable d'adsorber et de désorber des ions d'un métal alcalin M1, ladite électrode positive étant déposée sur un collecteur de courant d'électrode positive, et l'électrode négative comprend au moins une matière active d'électrode négative capable d'intercaler et de dés-intercaler des ions d'un métal alcalin M1, ladite électrode négative étant déposée sur un collecteur de courant d'électrode négative.

Le corps principal de l'enveloppe externe **3** a une partie inférieure **5** et une partie supérieure **6.**

A l'issue de l'étape ii), l'élément bobiné cylindrique **2** est inséré dans le corps principal de l'enveloppe externe **3.** Par ailleurs, le collecteur de courant de l'électrode positive dépassant **7** est situé dans la partie inférieure **5** du corps principal de l'enveloppe externe et le collecteur de courant de l'électrode négative dépassant **8** est situé dans la partie supérieure **6** du corps principal de l'enveloppe externe **3.** La partie inférieure du corps principal de l'enveloppe externe est fermée hermétiquement.

L'étape ii) comprend en outre une sous-étape ii-1) au cours de laquelle, le collecteur de courant de l'électrode négative dépassant **8** est connecté électriquement à une première pièce en matériau conducteur **9**, de préférence par soudage (e.g. à l'aide d'une soudure laser par transparence), brasage, brasage-diffusion ou contacts serrés ou vissés. La technique de soudage laser par transparence permet de connecter électriquement toutes les spires de l'élément bobiné.

L'étape ii) comprend en outre une sous-étape ii-2) au cours de laquelle, le collecteur de courant de l'électrode positive dépassant **7** est connecté électriquement à la partie inférieure **5** du corps principal de l'enveloppe externe **3**, de préférence par soudage (e.g. à l'aide d'une soudure laser par transparence), brasage, brasage-diffusion ou contacts serrés ou vissés. La technique de soudage laser par transparence est conventionnellement utilisée dans les procédés de préparation de supercondensateurs symétriques non hybrides classiques. Elle permet de connecter électriquement toutes les spires de l'élément bobiné.

La première pièce en matériau conducteur **9** est de préférence constituée d'un matériau conducteur identique à celui du collecteur de courant de l'électrode négative, notamment en cuivre ou en alliage de cuivre.

Sur la figure la, la première pièce en matériau conducteur **9** ferme de façon étanche et temporaire en partie la partie supérieure **6** du corps principal de l'enveloppe externe **3** du supercondensateur.

La pièce en matériau conducteur **9** traverse de manière étanche la partie supérieure du corps principal de l'enveloppe externe **3**, notamment *via* un moyen d'étanchéité **10** (e.g. joint d'étanchéité) qui assure l'isolation électrique entre la pièce en matériau conducteur **9** et l'enveloppe externe **3.**

La première pièce en matériau conducteur **9** comporte un volume libre central **11** permettant le passage et l'insertion d'une masse solide **12** comprenant un métal alcalin M1 dans le volume libre central **4** de l'élément bobiné **2** (étape iv)).

Les parties inférieure **5** et supérieure **6** du corps principal de l'enveloppe externe **3** peuvent être deux éléments distincts. L'étape ii) comprend alors une sous-étape ii-3) au cours de laquelle lesdites parties sont reliées mécaniquement pour former le corps principal de l'enveloppe, notamment par soudage.

La partie inférieure **5** du corps principal de l'enveloppe **3** est constituée d'un matériau conducteur électrochimiquement compatible avec celui du collecteur de courant de l'électrode positive, notamment en aluminium.

La partie supérieure **6** du corps principal de l'enveloppe est constituée d'un matériau conducteur électrochimiquement compatible avec celui du collecteur de courant de l'électrode positive, notamment en aluminium.

La figure 1b représente la masse solide **12** comprenant un métal alcalin M1 que l'on souhaite insérer selon l'étape iv) dans le volume libre central **4** de l'élément bobiné *via* le volume libre central **11** de la première pièce en matériau conducteur **9.** Le métal alcalin M1 est de préférence choisi parmi le lithium, le sodium et le potassium, et de préférence encore du lithium. La figure 1b illustre une masse solide **12** ayant une hauteur supérieure à celle de l'élément bobiné 2. Ceci permet ainsi de fournir du métal alcalin M1 sur toute la hauteur des électrodes de l'élément bobiné **2** au cours de l'étape iv).

La masse solide **12** illustrée sur la figure 1b est uniquement constituée dudit métal alcalin M1 et se présente sous la forme d'un barreau plein ou d'une tige pleine, notamment cylindrique.

Le barreau ou la tige **12** peut avoir un diamètre allant de 1 à 50 mm environ, et de préférence allant de 5 à 20 mm environ.

Afin de permettre la connexion électrique de la masse solide **12** avec l'électrode négative selon l'étape v), la masse solide **12** est reliée mécaniquement et électriquement à une deuxième pièce en matériau conducteur **13**, notamment en cuivre ou en alliage de cuivre. Cette deuxième pièce en matériau conducteur **13** est configurée pour assurer la connexion électrique avec la première pièce en matériau conducteur **9.** Cela permet ainsi de connecter électriquement la masse solide **12** avec l'électrode négative *via* les deux pièces en matériau conducteur **9** et **13.**

La figure 2 illustre une vue en coupe selon un axe transversal du supercondensateur de la présente invention tel qu'obtenu à l'issue de l'étape iv) [ou l'étape iii), si l'étape iv) d'insertion de la masse solide a lieu avant ladite étape iii)].

La deuxième pièce en matériau conducteur **13** est configurée pour fermer ou recouvrir complètement le volume libre central **11** de la première pièce **9** à l'issue de l'étape iv) (i.e. lorsque l'insertion est terminée). Ainsi, au cours de l'étape iv), la masse solide **12** est insérée dans le volume central libre **4** de l'élément bobiné **2** *via* le volume libre central **11** de la première pièce en matériau conducteur **9.** A la fin de l'insertion, la première pièce en matériau conducteur **9** est en contact mécanique et électrique avec la deuxième pièce en matériau conducteur **13** et l'association des première et deuxième pièces en matériau conducteur **9** et **13** ferme complètement de façon étanche et temporaire la partie supérieure **6** du corps principal de l'enveloppe externe **3.**

La figure 2 illustre une connexion électrique directe entre les première et deuxième pièces en matériau conducteur **9** et **13.**

Afin de faciliter l'insertion de la masse solide **12**, le volume libre central **11** de la première pièce en matériau conducteur **9** a des dimensions (e.g. un diamètre) sensiblement identiques à celles du volume libre central **4** de l'élément bobiné **2** .

La deuxième pièce en matériau conducteur **13** est de préférence de forme rectangulaire, carrée ou cylindrique, notamment de forme identique à celle de la première pièce en matériau conducteur **9** de manière à améliorer le contact et la connexion entre les première et deuxième pièces en matériau conducteur **9** et **13.**

Des moyens d'étanchéité entre les première et deuxième pièces en matériau conducteur **9** et **13** peuvent être utilisés pour assurer une fermeture étanche et temporaire de la partie supérieure **6** du corps principal de l'enveloppe externe **3**.

A l'issue de l'étape iv), l'association des première et deuxième pièces en matériau conducteur ferme complètement la partie supérieure du corps principal de l'enveloppe.

Par ailleurs, l'étape iv) permet la connexion électrique de la masse solide **12** au collecteur de courant débordant de l'électrode négative **8** (i.e. étapes iv) et v) concomitantes).

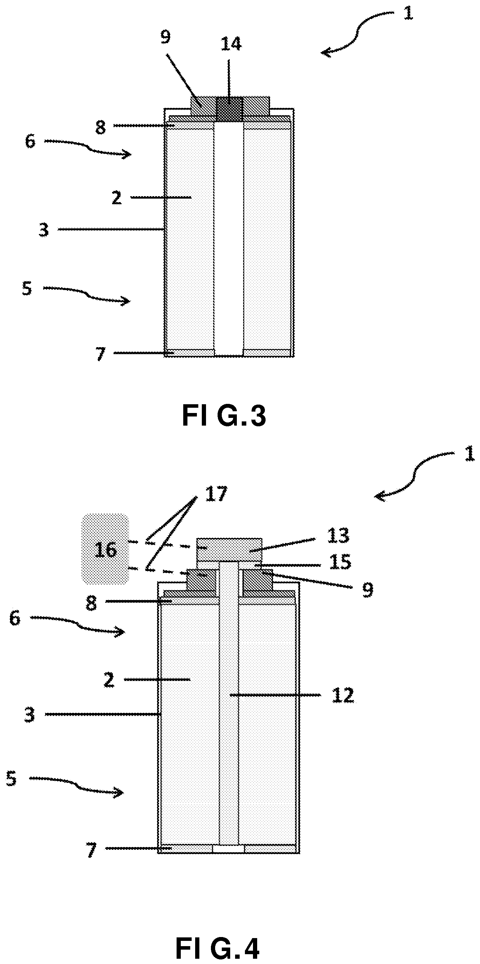

La figure 3 représente une vue en coupe selon un axe transversal du supercondensateur de la présente invention tel qu'obtenu à l'issue de l'étape vii). La fermeture hermétique (et définitive) du supercondensateur est effectuée grâce à un bouchon de fermeture **14**, par exemple de type rivet, d'un couvercle, d'une soudure (par exemple par la technique de soudage par friction malaxage, bien connue selon l'anglicisme « Friction Stir Welding ») ou d'un opercule éventuellement équipé d'une valve anti-surpression. Ce bouchon de fermeture **14** est configuré pour fermer le volume libre central **11** de la première pièce en matériau conducteur 9.

La figure 4 représente un mode de réalisation de l'invention dans lequel la connexion électrique entre les première et deuxième pièces en matériau conducteur **9** et **13** est indirecte.

Dans ce mode de réalisation, le type de liaison indirecte entre la première pièce en matériau conducteur **9** et la deuxième pièce en matériau conducteur **13** implique une pièce intermédiaire **15** se situant entre les deux pièces en matériau conducteur et étant connectée mécaniquement auxdites pièces en matériau conducteur.

Cette pièce intermédiaire **15** est une pièce isolante (e.g. en matériau élastomère ou thermoplastique).

La connexion électrique entre les deux pièces en matériau conducteur **9** et **13** est effectuée à l'aide d'un circuit électrique externe **16** (chargeur/déchargeur) et de liaisons électriques **17.** La pièce intermédiaire isolante **15** assure l'étanchéité entre les deux pièces en matériau conducteur **9** et **13.**

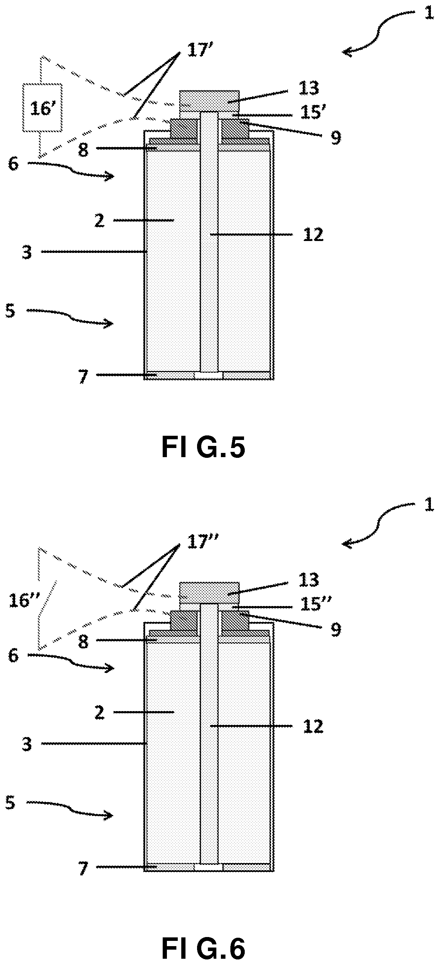

La figure 5 représente un mode de réalisation de l'invention dans lequel la connexion électrique entre les première et deuxième pièces en matériau conducteur **9** et **13** est indirecte.

Dans ce mode de réalisation, le type de liaison indirecte entre la première pièce en matériau conducteur **9** et la deuxième pièce en matériau conducteur **13** implique une pièce intermédiaire **15'** se situant entre les deux pièces en matériau conducteur et étant connectée mécaniquement auxdites pièces en matériau conducteur.

Cette pièce intermédiaire **15'** est une pièce isolante (e.g. en matériau élastomère ou thermoplastique).

La connexion électrique entre les deux pièces en matériau conducteur **9** et **13** est effectuée à l'aide d'une résistance externe **16'** (chargeur/déchargeur) et de liaisons électriques **17'.** La pièce intermédiaire isolante **15'** assure l'étanchéité entre les deux pièces en matériau conducteur **9** et **13.**

La figure 6 représente un mode de réalisation de l'invention dans lequel la connexion électrique entre les première et deuxième pièces en matériau conducteur **9** et **13** est indirecte.

Dans ce mode de réalisation, le type de liaison indirecte entre la première pièce en matériau conducteur **9** et la deuxième pièce en matériau conducteur **13** implique une pièce intermédiaire **15"** se situant entre les deux pièces en matériau conducteur et étant connectée mécaniquement auxdites pièces en matériau conducteur.

Cette pièce intermédiaire **15"** est une pièce isolante (e.g. en matériau élastomère ou thermoplastique).

La connexion électrique entre les deux pièces en matériau conducteur **9** et **13** est effectuée à l'aide d'un interrupteur de court-circuit externe **16"** et de liaisons électriques **17".** La pièce intermédiaire isolante **15"** assure l'étanchéité entre les deux pièces en matériau conducteur **9** et **13.**

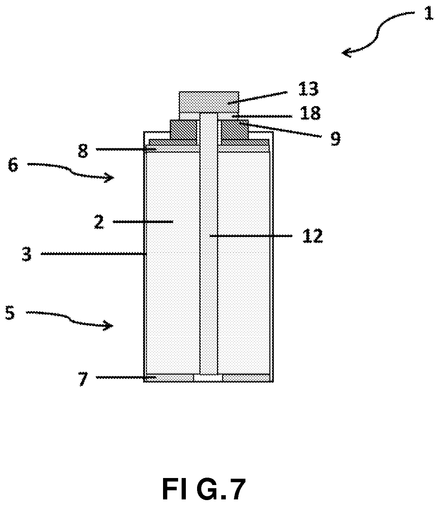

La figure 7 représente un mode de réalisation de l'invention dans lequel la connexion électrique entre les première et deuxième pièces en matériau conducteur **9** et **13** est indirecte.

Dans ce mode de réalisation, le type de liaison indirecte entre la première pièce en matériau conducteur **9** et la deuxième pièce en matériau conducteur **13** implique une pièce intermédiaire **18** se situant entre les deux pièces en matériau conducteur et étant connectée mécaniquement auxdites pièces en matériau conducteur.

Cette pièce intermédiaire **18** est une pièce à résistivité contrôlée (e.g. en matériau élastomère ou thermoplastique).

La connexion électrique entre les deux pièces en matériau conducteur **9** et **13** est effectuée *via* la résistance électrique fournie par la pièce intermédiaire **18** (également appelée « entretoise à résistance contrôlée »).

La pièce intermédiaire **18** assure également l'étanchéité entre les deux pièces en matériau conducteur **9** et **13.**

## Revendications

1. Procédé de préparation d'un supercondensateur hybride métal alcalin-ion cylindrique comprenant au moins un élément bobiné cylindrique et une enveloppe externe contenant un corps principal destiné à recevoir ledit élément bobiné cylindrique, ledit procédé comprenant au moins les étapes suivantes :
i) la préparation d'un élément bobiné cylindrique centré sur un axe X-X comprenant au moins une électrode positive, au moins une électrode négative et au moins un séparateur intercalé entre les électrodes positive et négative, les électrodes positive et négative et le séparateur étant enroulés ensemble en spires autour dudit axe X-X, l'élément bobiné cylindrique ayant un volume libre central selon l'axe X-X, étant entendu que :
* l'électrode positive comprend au moins une matière active d'électrode positive capable d'intercaler et de dés-intercaler des ions d'un métal alcalin M1 et/ou capable d'adsorber et de désorber des ions d'un métal alcalin M1, ladite électrode positive étant déposée sur un collecteur de courant d'électrode positive, et
* ladite électrode négative comprend au moins une matière active d'électrode négative capable d'intercaler et de dés-intercaler des ions d'un métal alcalin M1, ladite électrode négative étant déposée sur un collecteur de courant d'électrode négative,
ii) l'insertion de l'élément bobiné cylindrique dans un corps principal d'une enveloppe externe destiné à recevoir ledit élément bobiné cylindrique,
iii) l'imprégnation de l'élément bobiné cylindrique par un électrolyte liquide non aqueux comprenant un sel dudit métal alcalin M1 et un solvant organique,
ledit procédé étant **caractérisé en ce qu'**il comprend en outre :
iv) l'insertion d'une masse solide comprenant ledit métal alcalin M1 dans le volume libre central de l'élément bobiné cylindrique, avant ou après l'étape iii),
v) la connexion électrique de la masse solide avec l'électrode négative de manière à obtenir un court-circuit et à intercaler des ions dudit métal alcalin M1 dans l'électrode négative de l'élément bobiné cylindrique,
vi) le retrait de la masse solide de l'élément bobiné cylindrique, et
vii) la fermeture hermétique du corps principal de l'enveloppe externe, pour obtenir le supercondensateur hybride métal alcalin-ion cylindrique.

2. Procédé selon la revendication 1, **caractérisé en ce que** l'étape i) comprend une sous-étape i-1) d'assemblage d'au moins une électrode positive, d'au moins une électrode négative, et d'au moins un séparateur intercalé entre l'électrode négative et l'électrode positive, et une sous-étape i-2) d'enroulement de l'assemblage en spirale autour d'un axe X-X pour former un élément bobiné cylindrique ayant un volume libre central selon l'axe X-X.

3. Procédé selon l'une quelconque des revendications précédentes, **caractérisé en ce que** la matière active de l'électrode négative comprend du graphite et éventuellement un matériau choisi parmi le charbon actif, le graphène, le carbone dérivé de carbure, le carbone dur et le carbone tendre.

4. Procédé selon l'une quelconque des revendications précédentes, **caractérisé en ce que** la matière active de l'électrode positive comprend un matériau carboné poreux ou un oxyde de métal de transition.

5. Procédé selon l'une quelconque des revendications précédentes, **caractérisé en ce que** la matière active de l'électrode positive comprend du charbon actif et éventuellement un matériau choisi parmi le graphite, le graphène, le carbone dérivé de carbure, le carbone dur et le carbone tendre.

6. Procédé selon l'une quelconque des revendications précédentes, **caractérisé en ce que** le collecteur de courant de l'électrode négative est en cuivre.

7. Procédé selon l'une quelconque des revendications précédentes, **caractérisé en ce que** le collecteur de courant de l'électrode positive est en aluminium.

8. Procédé selon l'une quelconque des revendications précédentes, **caractérisé en ce que** le métal alcalin M1 est choisi parmi le lithium, le sodium et le potassium.

9. Procédé selon l'une quelconque des revendications précédentes, **caractérisé en ce que** la masse solide est uniquement constituée dudit métal alcalin M1 et elle est sous la forme d'un barreau plein ou d'une tige pleine dudit métal alcalin M1.

10. Procédé selon l'une quelconque des revendications précédentes, **caractérisé en ce que** l'étape v) dure un temps suffisant pour permettre de charger l'électrode négative en ions du métal alcalin M1 à une valeur allant de 70 à 95% de la charge totale de l'électrode.

11. Procédé selon l'une quelconque des revendications précédentes, **caractérisé en ce qu'**il comprend en outre après l'étape vi) ou pendant l'étape vi), une étape vi') de vidage du surplus d'électrolyte liquide non aqueux présent dans le corps principal de l'enveloppe externe.

12. Procédé selon l'une quelconque des revendications précédentes, **caractérisé en ce que** l'étape vii) est effectuée à l'aide d'un bouchon de fermeture, d'un couvercle, d'une soudure ou d'un opercule.

13. Procédé selon l'une quelconque des revendications précédentes, **caractérisé en ce que** le corps principal de l'enveloppe externe a une partie inférieure et une partie supérieure et l'étape ii) est effectuée de manière à positionner le collecteur de courant de l'électrode positive dépassant dans la partie inférieure du corps principal de l'enveloppe externe et le collecteur de courant de l'électrode négative dépassant dans la partie supérieure du corps principal de l'enveloppe externe.

14. Procédé selon la revendication 13, **caractérisé en ce que** l'étape ii) comprend une sous-étape ii-1) au cours de laquelle le collecteur de courant de l'électrode négative dépassant à une extrémité dudit élément bobiné est connecté électriquement à une pièce en matériau conducteur.

15. Procédé selon la revendication 13 ou 14, **caractérisé en ce que** l'étape ii) comprend une sous-étape ii-2) au cours de laquelle le collecteur de courant de l'électrode positive dépassant à une extrémité dudit élément bobiné est connecté électriquement à la partie inférieure du corps principal de l'enveloppe externe.

16. Procédé selon l'une quelconque des revendications 13 à 15, **caractérisé en ce qu'**à l'issue de l'étape ii), la partie inférieure du corps principal de l'enveloppe externe est fermée hermétiquement et définitivement et l'insertion selon l'étape iv) est effectuée par la partie supérieure du corps principal de l'enveloppe externe.

17. Procédé selon l'une quelconque des revendications 14 à 16, **caractérisé en ce que** la pièce en matériau conducteur est constituée d'un matériau conducteur identique à celui du collecteur de courant de l'électrode négative.

18. Procédé selon l'une quelconque des revendications 14 à 17, **caractérisé en ce que** la pièce en matériau conducteur est configurée pour fermer de façon étanche et temporaire au moins en partie, voire complètement, la partie supérieure du corps principal de l'enveloppe externe du supercondensateur.

19. Procédé selon l'une quelconque des revendications 14 à 18, **caractérisé en ce que** la pièce en matériau conducteur est apte à traverser de manière étanche la partie supérieure du corps principal de l'enveloppe externe.

20. Procédé selon l'une quelconque des revendications 14 à 19, **caractérisé en ce qu'**au cours de l'étape v), la masse solide est reliée mécaniquement et électriquement à la pièce en matériau conducteur telle que définie selon les revendications 14 et 17 à 19 et appelée « première pièce en matériau conducteur » ou à une autre pièce en matériau conducteur appelée « deuxième pièce en matériau conducteur », ladite deuxième pièce en matériau conducteur étant configurée pour assurer la connexion électrique directe ou indirecte avec la première pièce en matériau conducteur.

21. Procédé selon la revendication 20, **caractérisé en ce qu'**à l'issue de l'étape iv), l'association des première et deuxième pièces en matériau conducteur ferme complètement la partie supérieure du corps principal de l'enveloppe externe.

22. Procédé selon la revendication 20 ou 21, **caractérisé en ce que** la première pièce en matériau conducteur comporte un volume libre central permettant le passage et l'insertion de la masse solide dans le volume libre central de l'élément bobiné cylindrique et la deuxième pièce en matériau conducteur est configurée pour fermer ou recouvrir complètement le volume libre central de la première pièce à l'issue de l'étape iv).

23. Supercondensateur hybride métal alcalin-ion cylindrique, **caractérisé en ce qu'**il est obtenu selon un procédé tel que défini à l'une quelconque des revendications précédentes.

## Patentansprüche

1. Prozess zur Herstellung eines zylindrischen hybriden Superkondensators mit Alkalimetallionen, umfassend mindestens ein zylindrisches gewickeltes Element und eine externe Hülle, enthaltend einen Hauptkörper, der ausgelegt ist, um das zylindrische gewickelte Element aufzunehmen, wobei das Verfahren mindestens die folgenden Schritt umfasst:
i) Herstellen eines zylindrischen gewickelten Elements, das auf einer Achse X - X zentriert ist, umfassend mindestens eine positive Elektrode, mindestens eine negative Elektrode und mindestens einen Trenner, der zwischen die positive und die negative Elektrode eingeschoben ist, wobei die positive und negative Elektrode und der Trenner gemeinsam in Windungen um die Achse X - X gewickelt sind, wobei das zylindrische gewickelte Element ein zentrales freies Volumen gemäß der Achse X - X aufweist, wobei davon ausgegangen wird, dass:
* die positive Elektrode mindestens ein aktives Material der positiven Elektrode umfasst, das dazu in der Lage ist, Ionen eines Alkalimetalls M1 einzubauen und auszubauen und/oder dazu in der Lage ist, Ionen eines Alkalimetalls M1 zu adsorbieren und zu desorbieren, wobei die positive Elektrode auf einem Stromkollektor mit positiver Elektrode abgelegt ist, und
* die negative Elektrode mindestens ein aktives Material einer negativen Elektrode umfasst, das dazu in der Lage ist, Ionen eines Alkalimetalls M1 einzubauen und auszubauen, wobei die negative Elektrode auf einem Stromkollektor mit negativer Elektrode abgelegt ist,
ii) Einführen des zylindrischen gewickelten Elements in einen Hauptkörper einer äußeren Hülle, der ausgelegt ist, um das zylindrische gewickelte Element aufzunehmen,
iii) Imprägnieren des zylindrischen gewickelten Elements durch einen flüssigen nicht wässrigen Elektrolyt, umfassend ein Salz des Alkalimetalls M1 und ein organisches Lösemittel, wobei das Verfahren **dadurch gekennzeichnet ist, dass** es außerdem Folgendes umfasst:
iv) Einführen einer festen Masse, umfassend das Alkalimetall M1, in ein freies zentrales Volumen des zylindrischen gewickelten Elements vor oder nach Schritt iii),
v) elektrisches Verbinden der festen Masse mit der negativen Elektrode, um einen Kurzschluss zu erhalten und Ionen des Alkalimetalls M1 in die negative Elektrode des zylindrischen gewickelten Elements einzuschieben,
vi) Rückziehen der festen Masse des zylindrischen gewickelten Elements, und
vii) hermetisches Schließen des Hauptkörpers der äußeren Hülle, um den zylindrischen hybriden Superkondensator mit Alkalimetallionen zu erhalten.

2. Verfahren nach Anspruch 1, **dadurch gekennzeichnet, dass** Schritt i) einen Unterschritt i-1) des Montierens mindestens einer positiven Elektrode, mindestens einer negativen Elektrode und mindestens eines Trenners umfasst, der zwischen die negative Elektrode und die positive Elektrode eingeschoben ist, und einen Unterschritt i-2) des Aufrollens der Montage in einer Spirale um eine Achse X - X, um ein zylindrisches gewickeltes Element zu bilden, das ein zentrales freies Volumen gemäß der Achse X - X aufweist.

3. Verfahren nach einem der vorhergehenden Ansprüche, **dadurch gekennzeichnet, dass** das aktive Material der negativen Elektrode Graphit und eventuell ein Material umfasst, ausgewählt aus Aktivkohle, Graphen, Kohle, abgeleitet von Carbid, festem Kohlenstoff und weichem Kohlenstoff.

4. Verfahren nach einem der vorhergehenden Ansprüche, **dadurch gekennzeichnet, dass** das aktive Material der positiven Elektrode ein poröses Kohlenstoffmaterial oder ein Oxid eines Übergangsmetalls umfasst.

5. Verfahren nach einem der vorhergehenden Ansprüche, **dadurch gekennzeichnet, dass** das aktive Material der positiven Elektrode Aktivkohle und eventuell ein Material umfasst, ausgewählt aus Graphit, Graphen, Kohle, abgeleitet von Carbid, festem Kohlenstoff und weichem Kohlenstoff.

6. Verfahren nach einem der vorhergehenden Ansprüche, **dadurch gekennzeichnet, dass** der Stromkollektor der negativen Elektrode aus Kupfer ist.

7. Verfahren nach einem der vorhergehenden Ansprüche, **dadurch gekennzeichnet, dass** der Stromkollektor der positiven Elektrode aus Aluminium ist.

8. Verfahren nach einem der vorhergehenden Ansprüche, **dadurch gekennzeichnet, dass** das Alkalimetall M1 ausgewählt ist aus Lithium, Natrium und Kalium.

9. Verfahren nach einem der vorhergehenden Ansprüche, **dadurch gekennzeichnet, dass** die feste Masse ausschließlich aus dem Alkalimetall M1 besteht und die Form eines massiven Stabs oder eines massiven Stifts des Alkalimetalls M1 aufweist.

10. Verfahren nach einem der vorhergehenden Ansprüche, **dadurch gekennzeichnet, dass** Schritt v) eine ausreichende Zeit dauert, um zu ermöglichen, die negative Elektrode mit Ionen des Alkalimetalls M1 mit einem Wert zu laden, der von 70 bis 95 % der Gesamtladung der Elektrode reicht.

11. Verfahren nach einem der vorhergehenden Ansprüche, **dadurch gekennzeichnet, dass** es außerdem nach Schritt vi) oder während Schritt vi) einen Schritt vi') des Entfernens der Überschusses an nicht wässrigem flüssigen Elektrolyt umfasst, der im Hauptkörper der äußeren Hülle vorhanden ist.

12. Verfahren nach einem der vorhergehenden Ansprüche, **dadurch gekennzeichnet, dass** Schritt vii) mit Hilfe eines Verschlussstopfens, eines Deckels, einer Schweißung oder eines Schutzdeckels durchgeführt wird.

13. Verfahren nach einem der vorhergehenden Ansprüche, **dadurch gekennzeichnet, dass** der Hauptkörper der äußeren Hülle einen unteren Teil und einen oberen Teil aufweist und Schritt ii) durchgeführt wird, um den überstehenden Stromkollektor der positiven Elektrode in den unteren Teil des Hauptkörpers des äußeren Hülle und den überstehenden Stromkollektor der negativen Elektrode in den oberen Teil des Hauptkörpers des äußeren Hülle zu positionieren.

14. Verfahren nach Anspruch 13, **dadurch gekennzeichnet, dass** Schritt ii) einen Unterschritt ii-1) umfasst, im Laufe dessen der überstehende Stromkollektor der negativen Elektrode an einem Ende des gewickelten Elements elektrisch mit einem Stück aus leitendem Material verbunden ist.

15. Verfahren nach Anspruch 13 oder 14, **dadurch gekennzeichnet, dass** Schritt ii) einen Unterschritt ii-2) umfasst, im Laufe dessen der überstehende Stromkollektor der positiven Elektrode an einem Ende des gewickelten Elements elektrisch an dem unteren Teil des Hauptkörpers des äußeren Hülle verbunden ist.

16. Verfahren nach einem der Ansprüche 13 bis 15, **dadurch gekennzeichnet, dass** am Ausgang von Schritt ii) der untere Teil des Hauptkörpers des äußeren Hülle hermetisch und definitiv geschlossen ist und die Einführung gemäß Schritt iv) durch den oberen Teil des Hauptkörpers der äußeren Hülle durchgeführt wird.

17. Verfahren nach einem der Ansprüche 14 bis 16, **dadurch gekennzeichnet, dass** das Stück aus leitendem Material aus einem leitenden Material besteht, das identisch mit demjenigen des Stromkollektors der negativen Elektrode ist.

18. Verfahren nach einem der Ansprüche 14 bis 17, **dadurch gekennzeichnet, dass** das Stück aus leitendem Material konfiguriert ist, um auf dichte und temporäre Weise mindestens teilweise, ja sogar vollständig den oberen Teil des Hauptkörpers der äußeren Hülle des Superkondensators zu schließen.

19. Verfahren nach einem der Ansprüche 14 bis 18, **dadurch gekennzeichnet, dass** das Stück aus leitendem Material ausgelegt ist, um auf dichte Weise den oberen Teil des Hauptkörpers des äußeren Hülle zu queren.

20. Verfahren nach einem der Ansprüche 14 bis 19, **dadurch gekennzeichnet, dass** im Laufe von Schritt v) die feste Masse mechanisch und elektrisch mit dem Stück aus leitendem Material, wie nach Anspruch 14 und 17 bis 19 definiert und bezeichnet als "erstes Stück aus leitendem Material" oder mit einem anderen Stück aus leitendem Material, bezeichnet als "zweites Stück aus leitendem Material" verbunden ist, wobei das zweite Stück aus leitendem Material konfiguriert ist, um die direkte oder indirekte elektrische Verbindung mit dem ersten Stück aus leitendem Material sicherzustellen.

21. Verfahren nach Anspruch 20, **dadurch gekennzeichnet, dass** am Ausgang von Schritt iv) die Verbindung des ersten und zweiten Stücks aus leitendem Material den oberen Teil des Hauptkörpers des äußeren Hülle vollständig schließt.

22. Verfahren nach Anspruch 20 oder 21, **dadurch gekennzeichnet, dass** das erste Stück aus leitendem Material ein zentrales freies Volumen umfasst, das den Durchgang und die Einführung der festen Masse in das freie zentrale Volumen des zylindrischen gewickelten Elements ermöglicht, und das zweite Stück aus leitendem Material konfiguriert ist, um das freie zentrale Volumen des ersten Stücks am Ausgang von Schritt iv) vollständig zu schließen oder abzudecken.

23. Zylindrischer hybrider Superkondensator mit Alkalimetallionen, **dadurch gekennzeichnet, dass** er gemäß einem Verfahren wie in einem der vorhergehenden Ansprüche definiert erhalten wird.

## Claims

1. A method for preparing a cylindrical, alkali metal-ion hybrid supercapacitor, comprising at least one cylindrical coiled element and an outer enclosure containing a main body intended to receive said cylindrical coiled element, said method comprising at least the following steps:
i) preparing a cylindrical coiled element centered on an axis X-X comprising at least one positive electrode, at least one negative electrode and at least one separator interposed between the positive and negative electrodes, the positive and negative electrodes and the separator being wound together in turns around said axis X-X, the cylindrical coiled element having a central free volume along the axis X-X, with the understanding that:
* the positive electrode comprises at least one positive electrode active material capable of interposing and de-interposing ions of an alkali metal M1 and/or capable of adsorbing and desorbing ions of an alkali metal M1, said positive electrode being deposited on a positive electrode current collector, and
* said negative electrode comprises at least one negative electrode active material capable of interposing and de-interposing ions of an alkali metal M1, said negative electrode being deposited on a negative electrode current collector,
ii) inserting the cylindrical coiled element into a main body of an outer enclosure intended to receive said cylindrical coiled element,
iii) impregnating the cylindrical coiled element with a nonaqueous liquid electrolyte comprising a salt of said alkali metal M1 and an organic solvent,
said method being **characterized in that** it further comprises:
iv) inserting a solid mass comprising said alkali metal M1 into the central free volume of the cylindrical coiled element, before or after step iii),
v) electrically connecting the solid mass with the negative electrode so as to obtain a short-circuit and to interpose ions of said alkali metal M1 into the negative electrode of the cylindrical coiled element,
vi) removing the solid mass from the cylindrical coiled element, and
vii) hermetically sealing the main body of the outer enclosure, in order to obtain the cylindrical, alkali metal-ion hybrid supercapacitor.

2. The method according to claim 1, **characterized in that** step i) comprises a sub-step i-1) for assembling at least one positive electrode, at least one negative electrode, and at least one separator interposed between the negative electrode and the positive electrode, and a sub-step i-2) for winding the assembly in a spiral around an axis X-X in order to form a cylindrical coiled element having a central free volume along the axis X-X.

3. The method according to any one of the preceding claims, **characterized in that** the active material of the negative electrode comprises graphite and optionally a material chosen from activated carbon, graphene, carbon derived from carbide, hard carbon and soft carbon.

4. The method according to any one of the preceding claims, **characterized in that** the active material of the positive electrode comprises a porous carbon material or a transition metal oxide.

5. The method according to any one of the preceding claims, **characterized in that** the active material of the positive electrode comprises activated carbon and optionally a material chosen from graphite, graphene, carbon derived from carbide, hard carbon and soft carbon.

6. The method according to any one of the preceding claims, **characterized in that** the current collector of the negative electrode is made from copper.

7. The method according to any one of the preceding claims, **characterized in that** the current collector of the positive electrode is made from aluminum.

8. The method according to any one of the preceding claims, **characterized in that** the alkali metal M1 is chosen from lithium, sodium and potassium.

9. The method according to any one of the preceding claims, **characterized in that** the solid mass is solely made from said alkali metal M1 and is in the form of a solid bar or a solid rod of said alkali metal M1.

10. The method according to any one of the preceding claims, **characterized in that** step v) lasts a sufficient amount of time to make it possible to charge the negative electrode with ions of the alkali metal M1 at a value ranging from 70 to 95% of the total charge of the electrode.

11. The method according to any one of the preceding claims, **characterized in that** it further comprises, after step vi) or during step vi), a step vi') for emptying the excess nonaqueous liquid electrolyte present in the main body of the outer enclosure.

12. The method according to any one of the preceding claims, **characterized in that** step vii) is carried out using a stopper, a cover, a weld or a membrane seal.

13. The method according to any one of the preceding claims, **characterized in that** the main body of the outer enclosure has a lower part and an upper part and step ii) is carried out so as to position the current collector of the positive electrode protruding in the lower part of the main body of the outer enclosure and the current collector of the negative electrode protruding in the upper part of the main body of the outer enclosure.

14. The method according to claim 13, **characterized in that** step ii) comprises a sub-step ii-1) during which the current collector of the negative electrode protruding at one end of said coiled element is electrically connected to a part made from conductive material.

15. The method according to claim 13 or 14, **characterized in that** step ii) comprises a sub-step ii-2) during which the current collector of the positive electrode protruding at one end of said coiled element is electrically connected to the lower part of the main body of the outer enclosure.

16. The method according to any one of claims 13 to 15, **characterized in that** at the end of step ii), the lower part of the main body of the outer enclosure is hermetically and permanently sealed and the insertion according to step iv) is done through the upper part of the main body of the outer enclosure.

17. The method according to any one of claims 14 to 16, **characterized in that** the part made from conductive material is made from a conductive material identical to that of the current collector of the negative electrode.

18. The method according to any one of claims 14 to 17, **characterized in that** the part made from conductive material is configured to tightly and temporarily seal, at least partially, or even completely, the upper part of the main body of the outer enclosure of the supercapacitor.

19. The method according to any one of claims 14 to 18, **characterized in that** the part made from conductive material is able to pass tightly through the upper part of the main body of the outer enclosure.

20. The method according to any one of claims 14 to 19, **characterized in that** during step v), the solid mass is mechanically and electrically coupled to the part made from conductive material as defined according to claims 14 and 17 to 19 and called "first part made from conductive material" or to another part made from conductive material called "second part made from conductive material", said second part made from conductive material being configured to ensure the direct or indirect electrical connection with the first part made from conductive material.

21. The method according to claim 20, **characterized in that** at the end of step iv), the association of the first and second parts made from conductive material completely closes the upper part of the main body of the outer enclosure.

22. The method according to claim 20 or 21, **characterized in that** the first part made from conductive material includes a central free volume allowing the passage and the insertion of the solid mass in the central free volume of the cylindrical coiled element and the second part made from conductive material is configured to close or completely cover the central free volume of the first part at the end of step iv).

23. A cylindrical, alkali metal-ion hybrid supercapacitor **characterized in that** it is obtained according to a method as defined in any one of the preceding claims.
